# EUROPÄISCHE PATENTSCHRIFT

(11) **EP 4 237 329 B1**
(45) Veröffentlichungstag und Bekanntmachung des Hinweises auf die Patenterteilung: **20.08.2025**
(21) Anmeldenummer: 21823191.8
(22) Anmeldetag: 28.10.2021
(51) Int. Cl.: B64D 27/34, B64D 35/021, B64U 30/24, B64C 27/10, B64C 27/43, B64C 27/52

(54) **ANTRIEBSEINHEIT FÜR EINEN DREHFLÜGLER UND DREHFLÜGLER**
DRIVE UNIT FOR A ROTORCRAFT AND ROTORCRAFT
UNITÉ DE PROPULSION POUR UN GIRAVION ET GIRAVION

(30) Priorität: 02.11.2020 DE 102020128799
(43) Veröffentlichungstag der Anmeldung: 06.09.2023
(73) Patentinhaber: Flynow Aviation GmbH, 5020 Salzburg (AT)
(72) Erfinder: AUSSERLECHNER, Peter, 5020 Salzburg (AT); GREIL, Jürgen, 5020 Salzburg (AT); KAMPITSCH, Markus, 5020 Salzburg (AT); STEINGRÄBER, Jens, 5020 Salzburg (AT)
(74) Vertreter: Prinz & Partner mbB
(86) Internationale Anmeldenummer: PCT/EP2021/080044
(87) Internationale Veröffentlichungsnummer: WO 2022/090423

(56) Entgegenhaltungen:
- EP-A1- 1 572 534
- EP-B1- 1 572 534
- DE-A1- 102016 206 551
- RU-C1- 2 715 113
- US-B2- 10 150 567

## Beschreibung

Die Erfindung betrifft eine Antriebseinheit für einen Drehflügler sowie einen Drehflügler mit einer Antriebseinheit.

Drehflügler, oft auch als Hubschrauber bezeichnet, umfassen normalerweise mindestens einen Propeller bzw. Rotor, der an einer Oberseite des Drehflüglers angeordnet ist und Auftrieb erzeugt, wenn er gedreht wird.

Wenn der Hubschrauber sich nicht im Schwebeflug befindet, sondern vorwärts fliegt, überlagert sich an den Rotor- bzw. Propellerblättern die Strömungsgeschwindigkeit, die aus der Drehung des Rotors resultiert, mit der Anströmgeschwindigkeit, die aus der Vorwärtsbewegung des Hubschraubers resultiert. Betrachtet man einen Umlauf eines Rotorblatts im Vorwärtsflug, so erkennt man einen Sektor, in dem sich das Rotorblatt nach hinten bewegt. Dort verringert sich die relative Anströmgeschwindigkeit des Rotorblattes um die entgegengesetzt gerichtete Fluggeschwindigkeit des Hubschraubers, so dass in einer Position des Rotorblattes von 90° relativ zur Flugrichtung die effektive Strömungsgeschwindigkeit minimal ist. In dem Sektor, in dem sich das Rotorblatt nach vorne bewegt, addieren sich die beiden Geschwindigkeiten, so dass in einer Position des Rotorblattes von 90° relativ zur Flugrichtung die Strömungsgeschwindigkeit maximal ist.

Betrachtet man einen Rotor mit zwei Rotorblättern, ergibt sich also im Zustand, in dem sich die beiden Rotorblätter genau senkrecht zur Flugrichtung befinden, eine merkliche Differenz zwischen dem hohen Auftrieb, der vom nach vorne laufenden Rotorblatt erzeugt wird, und dem niedrigen Auftrieb, der vom nach hinten laufenden Rotorblatt erzeugt wird.

Dieser Effekt ist beim Vorwärtsflug am stärksten ausgeprägt, da dort die höchsten Fluggeschwindigkeiten erreicht werden. Allerdings ergeben sich dieselben Effekte beim Seitwärts- oder Rückwärtsflug, wenn auch auf geringerem Niveau aufgrund der niedrigeren Fluggeschwindigkeiten.

Bei einem Rotor mit Rotorblättern, deren Anstellwinkel variiert werden kann, kann dieser Effekt durch eine zyklische Änderung des Anstellwinkels kompensiert werden. Der Anstellwinkel wird bei der Vorwärtsbewegung des Rotorblattes verringert, um der Erhöhung des Auftriebs durch die höhere Anströmgeschwindigkeit entgegenzuwirken, und bei der Rückwärtsbewegung erhöht, um die niedrigere Anströmgeschwindigkeit zu kompensieren.

Die Systeme, mit denen der Anstellwinkel der Rotorblätter zyklisch geändert werden kann (meist mittels einer Taumelscheibe) sind jedoch vergleichsweise aufwendig. Auch sind die Rotoren recht aufwendig.

Die EP 1 572 534 B1 offenbart eine Antriebseinheit für einen Drehflügler, mit einem ersten Propeller und einem zum ersten Propeller gegenläufigen zweiten Propeller. Die Propeller sind mittels zweier zentraler Elemente gelenkig an Antriebswellen kippbar gelagert. Die Propeller werden mittels zweier Elektromotoren angetrieben.

Die DE 10 2016 206 551 A1 beschreibt ein Fluggerät mit einer Zelle, an deren Oberseite eine Rotorachse schwenkbeweglich angeordnet ist, insbesondere kardanisch. An der Rotorachse sind zwei Rotorblattanordnungen angeordnet, die jeweils zwei Rotorblätter aufweisen.

Die US 10 150 567 B2 beschreibt die Anordnung zweier Elektromotoren in einer Antriebseinheit.

Es ist daher eine Aufgabe der Erfindung, eine Antriebseinheit für einen Drehflügler bereitzustellen, die möglichst einfach und kostengünstig ist.

Diese Aufgabe wird erfindungsgemäß gelöst durch eine Antriebseinheit für einen Drehflügler, mit einem ersten Propeller und einen zweiten Propeller, der gegenläufig zum ersten Propeller und von diesem axial beabstandet ist, mit einer ersten Antriebswelle und einer zur ersten Antriebswelle koaxial angeordneten zweiten Antriebswelle für die Propeller, wobei die beiden Propeller jeweils starr sind und relativ zur Rotationsachse ihrer Antriebswellen kippbar gelagert sind, wobei die Kippachse jedes Propellers in einer Ebene senkrecht zur Rotationsachse der Antriebswellen verläuft und relativ zur Längsachse des Propellers in einem Winkel ausgerichtet ist, der von 90° verschieden ist, und mit einem elektrischen Antriebsmodul mit mindestens zwei Rotoren, die mit jeweils einer der Antriebswellen gekoppelt sind, wobei das Verhältnis des Durchmessers der Propeller zum Axialabstand zwischen den Propellern zwischen 4:1 und 12:1 liegt. Mit dieser Antriebseinheit lassen sich verschiedene Vorteile vereinen.

Die Kippachse führt aufgrund ihrer Ausrichtung dazu, dass der Propeller, wenn er um die Kippachse schwenkt, eine Drehung um seine Längsachse ausführt. Diese Drehung führt zu einer Änderung des Anstellwinkels, und zwar bei einem Propeller mit zwei entgegengesetzt zueinander angeordneten Propellerblättern in entgegengesetzten Richtungen. Auf diese Weise kann der Anstellwinkel eines nach vorne laufenden Propellerblattes verringert werden, während gleichzeitig der Anstellwinkel eines nach hinten laufenden Propellerblattes erhöht wird. Dies ermöglicht, starre Propeller einzusetzen, also Propeller, bei denen die Propellerflügel starr und somit unveränderlich angestellt mit einer Nabe verbunden sind. Hierdurch ergeben sich ein einfacher Aufbau und geringe Kosten, während es dennoch möglich ist, den Anstellwinkel der Propellerblätter bei der Drehung zyklisch zu ändern. Dies erfolgt passiv, also allein unter der Wirkung des erzeugten Auftriebs und eines eventuellen Ungleichgewichts des Auftriebs. Die Kippachse ist dabei so ausgerichtet, dass eine Erhöhung des Auftriebs (beispielsweise durch eine Erhöhung der Anströmgeschwindigkeit beim Vorwärtsflug) den Propeller so kippt, dass der Anstellwinkel im Sektor mit höherem Auftrieb verringert wird. Dabei ergibt sich automatisch eine Vergrößerung des Anstellwinkels in dem Sektor des Propellers, in dem die relative Anströmgeschwindigkeit kleiner ist.

Indem die Propeller um die Kippachse verkippen können, können sie auch automatisch, also passiv, und selbstregulierend auf andere Störungen einer gleichmäßigen Auftriebsverteilung reagieren, beispielsweise bei Windböen. Hierdurch ergibt sich eine stabilere Fluglage, und es werden hohe Biegemomente im Propeller und in den Lagerstellen vermieden.

Indem das Verhältnis des Durchmessers der Propeller zum Axialabstand zwischen den Propellern zwischen 4:1 und 12:1 liegt, wird gewährleistet, dass die Propeller sich nicht berühren können, wenn die Vorwärtsgeschwindigkeit sich unterhalb der hierfür maximalen Reisegeschwindigkeit von ca. 150 km/h bewegt. Das genannte Verhältnis ist außerdem vorteilhaft, da bei einem derartigen Verhältnis die maximal auftretenden Biegemomente an den Antriebswellen gering sind. Je kürzer der Axialabstand zwischen den Propellern ist, desto geringer sind das Biegemoment und die hieraus resultierenden Lagerbelastungen insbesondere an der Antriebswelle für den oberen Propeller.

Des Weiteren findet in diesem Verhältnisbereich von Axialabstand zu Rotordurchmesser eine vorteilhafte aerodynamische Wechselwirkung zwischen zwei fixed pitch Propellern statt.

Die dem unteren Propeller zugeordnete Antriebswelle ist vorzugsweise als Hohlwelle ausgeführt, und die dem oberen Propeller zugeordnete Antriebswelle ist in der Hohlwelle drehbar geführt, so dass sich eine hohe Biegesteifigkeit für die Antriebswelle des oberen Propellers ergibt.

Da die Propeller starr ausgeführt sind, also als sogenannte Fixed-Pitch Propeller, wird der Betrag des erzeugten Auftriebs durch die Rotationsgeschwindigkeit gesteuert.

Der obere Propeller kann gegenüber dem unteren Propeller einen größeren Durchmesser aufweisen. Dadurch können Verwirbelungen und Strömungsungleichförmigkeiten, die von den rotierenden Blattspitzen des oberen Propellers erzeugt werden und aufgrund der Auftriebserzeugung nach unten in Richtung der unten liegenden Propellerebene abfließen, nicht mit den Propellern der unteren Ebene aerodynamisch interagieren, sondern auf einer im Radius gegenüber dem unteren Propeller vergrößerten Kreisbahn den unteren Propeller passieren. Insbesondere kann ein aufgrund der Anordnung aerodynamisch höher oder niedriger beanspruchter Propeller durch eine entsprechende Auslegung des Durchmessers hinsichtlich seines Antriebsdrehmoments bei bestimmten Drehzahlen an den jeweils anderen Propeller angeglichen werden, so dass ein Drehmomentengleichgewicht zwischen beiden Propellern bei möglichst geringem Drehzahlunterschied erreicht wird. Hierdurch lassen sich akustische Effekte wie Schwebungen vermeiden.

Die Kippachse verläuft relativ zur Längsachse des Propellers vorzugsweise in einem Winkel von +30° bis +50° bzw. -30° bis -50°. Bei einem derartigen Winkel kann die Auftriebsungleichverteilung besonders gut ausgeglichen werden.

Um ein Verkippen der Propeller zu ermöglichen, erstreckt sich entlang der Kippachse mindestens ein Bolzen, der eine Nabe des Propellers mit der Antriebswelle gelenkig verbindet. Durch einen Bolzen kann eine gelenkige Verbindung besonders einfach realisiert werden.

Gemäß einer Ausführungsform kann ein koaxial zur Nabe des Propellers angeordnetes und mit der Nabe lösbar verbundenes Zwischenstück vorgesehen sein, an dem der Bolzen gelagert ist und das in verschiedenen Winkelstellungen mit der Nabe verbindbar ist. Auf diese Weise kann der Winkel der Kippachse eingestellt werden, indem das Zwischenstück in einer entsprechenden Stellung mit der Nabe verbunden wird. Der Winkel kann auch nachträglich geändert werden, indem die Nabe vom Zwischenstück gelöst und in einer neuen Winkelstellung wieder eingesetzt wird.

Beispielsweise sind an der Nabe und an dem Zwischenstück korrespondierende Verzahnungen vorgesehen, wobei das Zwischenstück durch die Verzahnungen formschlüssig mit der Nabe verbunden ist.

Gemäß einer alternativen Ausführungsform kann der Propeller eine Verbindungsfläche aufweisen, in der eine Vielzahl von Löchern vorhanden ist, und ein Zwischenstück, an dem der Bolzen gelagert ist, kann eine zur Verbindungsfläche korrespondierende Anlagefläche haben, wobei in der Anlagefläche ein Lochbild vorhanden ist, welches derart ausgebildet ist, dass sich der Propeller in verschiedenen Winkelstellungen mit dem Zwischenstück verbinden lässt. Die Löcher in der Verbindungsfläche bzw. in der Anlagefläche dienen insbesondere als Schraublöcher, um den Propeller am Zwischenstück zu befestigen. Zur Befestigung des Propellers muss mindestens eines der Löcher des Lochbilds in der Anlagefläche des Zwischenstücks mit einem der Löcher in der Verbindungsfläche fluchten. Vorzugsweise ist das Lochbild jedoch derart ausgebildet, dass in jeder vorgesehenen Winkelstellung mehrere Löcher des Lochbilds mit Löchern in der Verbindungsfläche fluchten, um mehrere Verschraubungen realisieren zu können.

Die Verbindungsfläche kann in einem mit dem Propeller verbundenen Bauteil oder integral im Propeller gebildet sein.

In der Verbindungsfläche sind vorzugsweise mindestens zwei Lochkreise mit unterschiedlichem Durchmesser vorgesehen, wobei die Löcher des ersten Lochkreises in einem Winkelversatz zu den Löchern des zweiten Lochkreises angeordnet sind. Auf diese Weise lassen sich mehr unterschiedliche Winkelpositionen realisieren als mit lediglich einem Lochkreis, ohne die Stabilität des Bauteils durch einen zu engen Abstand zwischen den Löchern zu beeinträchtigen.

Das Lochbild im Zwischenstück weist entsprechend mindestens ein Loch auf, das sich mit den Löchern des ersten Lochkreises fluchtend ausrichten lässt, und mindestens ein zweites Loch, dass sich mit den Löchern des zweiten Lochkreises fluchtend ausrichten lässt. Anders ausgedrückt entspricht ein Radialabstand der Löcher in der Anlagefläche des Zwischenstücks zu einer Rotationsachse dem Radius der Lochkreise, wobei in der Anlagefläche mindestens zwei Löcher mit unterschiedlichem Radialabstand zur Rotationsachse des Propellers vorhanden sind.

Das elektrische Antriebsmodul weist insbesondere zwei Elektromotoren auf, die koaxial zueinander in einem gemeinsamen Gehäuse untergebracht sind. Dadurch kann die Antriebseinheit besonders kompakt sein.

Die Elektromotoren sind vorzugsweise als Innenläufermotoren ausgebildet. Durch die Ausführung der Elektromotoren als Innenläufer ist gewährleistet, dass die mit Strom beaufschlagten Statorspulen von der Außenseite des Motorgehäuses aus für elektrische Leitungen zugänglich sind und entstehende Abwärme leicht abführbar ist.

Gemäß einer Ausführungsform umfasst die Antriebseinheit eine Lagereinheit, mittels der die Antriebseinheit relativ zu einem Drehlagerpunkt schwenkbar mit einer Kabine eines Drehflüglers verbindbar ist. Durch die schwenkbare Lagerung der Antriebseinheit kann die Ausrichtung der Propeller in einer gewünschten Weise geänderte werden, so dass die Fluglage, Flugrichtung und Fluggeschwindigkeit ohne aufwendige Systeme gesteuert bzw. geregelt werden kann. Insbesondere kann auf Verstellmechanismen zur aktiven Änderung des Anstellwinkels der Propellerblätter relativ zur Propellernabe verzichtet werden, da der Drehflügler allein durch eine Drehzahländerung und Neigen der Antriebseinheit gesteuert werden kann.

Die Lagereinheit weist beispielsweise ein kegelförmiges Anbindungselement auf, mit dem die Antriebseinheit an einem Träger eines Drehflüglers montiert werden kann. Mit dem Anbindungselement können die auftretenden Belastungen zuverlässig in eine Trägerstruktur des Drehflüglers eingeleitet werden, während das Gewicht niedrig gehalten wird.

Um eine sogenannten Kippkopfsteuerung zu realisieren, kann zwischen der Lagereinheit und der Einheit gebildet aus Antriebsmodul und Antriebswellen eine Verstellvorrichtung wirken, um die Ausrichtung der Antriebswellen relativ zur Lagereinheit einstellen zu können. Die Antriebseinheit kann somit gleichzeitig den Auftrieb erzeugen und zur Steuerung des Drehflüglers dienen.

Die Verstellvorrichtung greift beispielsweise mit einem Ende am Antriebsmodul an, insbesondere am Gehäuse des Antriebsmoduls, so dass die auftretenden Kräfte unmittelbar aufgenommen und übertragen werden können.

Die Verstellvorrichtung weist beispielsweise mindestens einen Aktuator auf, der längenverstellbar ist. Beispielsweise umfasst der Aktuator einen Stellmotor.

Vorzugsweise sind zwei Aktuatoren vorgesehen, wobei beide Aktuatoren in Umfangsrichtung bezüglich der Lagereinheit in einem Winkel zueinander angeordnet sind, um die Antriebseinheit definiert in alle Richtungen auslenken zu können. Der Winkelabstand der beiden Aktuatoren beträgt vorzugweise 90°, um eine maximale Effizienz zu gewährleisten.

Die beiden Aktuatoren sind voneinander mechanisch unabhängig, so dass eine Neigung der Antriebseinheit besonders flexibel eingestellt werden, sodass ein Drehflügler mit einer entsprechenden Antriebseinheit besonders flexibel manövriert werden kann. Insbesondere kann auf diese Weise eine gute Manövrierfähigkeit auf engem Raum erreicht werden, sodass sich die Antriebseinheit besonders gut für Drehflügler eignet, die in urbanem Umfeld eingesetzt werden, wo häufig beengte Platzverhältnisse herrschen.

Die Einheit gebildet aus Antriebsmodul und Antriebswellen kann über ein Kardangelenk mit der Lagereinheit verbunden sein. Dadurch ist eine Schwenkbarkeit der Einheit gebildet aus Antriebsmodul und Antriebswellen in alle Richtungen gewährleistet. Gleichzeitig können axiale Kräfte aufgenommen werden.

Gemäß einer Ausführungsform ist ein Lager für die innenliegende der beiden Antriebswellen auf der von den Propellern abgewandten Seite des Kardangelenks angeordnet. Dadurch wird ein größerer Lagerabstand und somit eine stabile Lagerung des oberen Propellers erreicht.

Des Weiteren kann eine Steuereinheit zur Steuerung der Drehzahl der Propeller vorgesehen sein, wobei die Steuereinheit eingerichtet ist, die Drehzahlen der Propeller derart zu steuern, dass eine Drehmomentengleichheit vorliegt. Hierdurch ist kein Heckrotor erforderlich.

Die oben genannte Aufgabe wird des Weiteren erfindungsgemäß gelöst durch einen Drehflügler mit einer Antriebseinheit, die wie vorhergehend beschrieben ausgebildet ist, wobei der Drehflügler eine Kabine aufweist, die einen Fahrgastraum und/oder einen Nutzlastraum bildet. Dadurch ist der Drehflügler geeignet, Personen oder Güter zu transportieren.

Das Höchstabfluggewicht des Drehflügler liegt vorzugsweise zwischen 150 kg und 600 kg. Derartige Drehflügler eignen sich beispielsweise für den Transport einzelner Personen oder mehrerer Pakete. Somit eignen sie sich besonders für den Einsatz im urbanen Umfeld. Der Drehflügler kann somit als Drohne bezeichnet werden, die von außen gesteuert wird.

Der Drehflügler kann einen Träger für die Antriebseinheit umfassen, wobei die Verstellvorrichtung an der Lagereinheit fixiert ist und derart ausgebildet ist, dass sie die Einheit gebildet aus Antriebsmodul und Antriebswellen in Bezug zum Träger verschwenken kann.

Die Antriebseinheit ist vorzugsweise oberhalb der Kabine angeordnet, insbesondere wobei die Kabine den Träger bildet. Auf einen separaten Träger kann somit verzichtet werden.

Gemäß einer Ausführungsform weist der Drehflügler ein Fluglagekontrollsystem auf, welches zur Ansteuerung der Aktuatoren der Antriebseinheit eingerichtet ist. Das Fluglagekontrollsystem kann somit dazu dienen, eine Neigung der Antriebseinheit relativ zum Träger einzustellen, um den Drehflügler zu steuern. Anders ausgedrückt wird eine Kippbewegung der gesamten Antriebseinheit erreicht.

Weitere Vorteile und Merkmale ergeben sich aus der nachfolgenden Beschreibung und aus den beiliegenden Zeichnungen, auf die Bezug genommen wird. In den Zeichnungen zeigen:
- Figur 1 einen erfindungsgemäßen Drehflügler mit einer erfindungsgemäßen Antriebseinheit,
- Figur 2 eine Schnittdarstellung des Drehflüglers aus Figur 1 im Bereich der Antriebseinheit,
- Figur 3 eine Detailansicht des Drehflüglers im Bereich einer Lagereinheit der Antriebseinheit,
- Figur 4 einen Querschnitt durch die Lagereinheit,
- Figur 5 eine Detailansicht im Bereich einer Verstellvorrichtung der Antriebseinheit,
- Figur 6 eine Draufsicht auf einen Propeller,
- Figur 7 eine Detailansicht einer Propelleraufhängung,
- Figur 8 eine weitere Detailansicht einer Propelleraufhängung,
- Figur 9 eine Detailansicht einer alternativen Propelleraufhängung, und
- Figur 10 die Propelleraufhängung aus Figur 9.

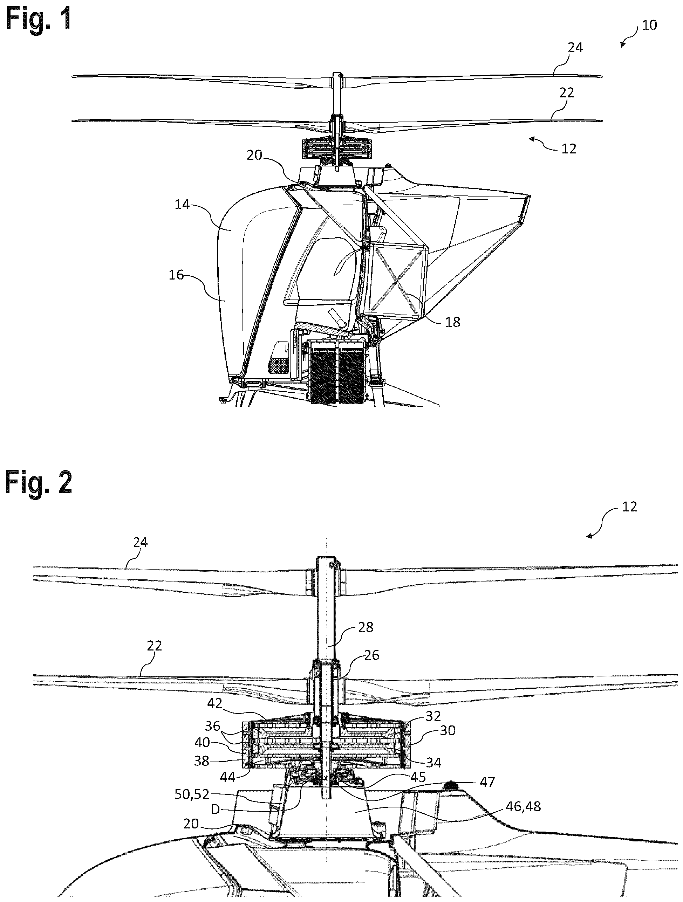

Figur 1 zeigt einen Drehflügler/Hubschrauber 10 mit einer Antriebseinheit 12.

Der Drehflügler 10 hat eine Kabine 14, in der ein Fahrgastraum 16 und ein Nutzlastraum 18 gebildet sind. Alternativ kann der Drehflügler 10 ausschließlich zum Transport von Gütern ausgebildet sein, sodass der Fahrgastraum 16 entfallen kann oder als zweiter Nutzlastraum genutzt wird.

Das Höchstabfluggewicht des Drehflüglers 10 liegt beispielsweise zwischen 150 kg und 600 kg.

Der Drehflügler 10 umfasst einen Träger 20 für die Antriebseinheit 12, der an der Kabine 14 befestigt ist. Die Antriebseinheit 12 ist dabei oberhalb der Kabine 14 angeordnet.

Alternativ kann der Träger 20 durch die Kabine 14 gebildet sein.

Die Antriebseinheit 12, die auch in Figur 2 dargestellt ist, umfasst einen ersten Propeller 22 und einen zweiten Propeller 24.

Die beiden Propeller 22, 24 sind koaxial zueinander und voneinander axial beabstandet angeordnet. Insbesondere bilden die Propeller 22, 24 einen Doppelpropeller.

Die beiden Propeller 22, 24 sind zueinander gegenläufig drehend. Sie haben einen festen Anstellwinkel, da die Propellerblätter starr mit ihrer Nabe verbunden sind. Es sind hier genau zwei Propellerblätter vorgesehen.

Das Verhältnis des Durchmessers der Propeller 22, 24 zum Axialabstand zwischen den Propellern 22, 24 liegt beispielsweise zwischen 4:1 und 12:1. Im Falle von unterschiedlichen Durchmessern der Propeller bezieht sich dieses Verhältnis auf den kleineren Durchmesser.

Des Weiteren umfasst die Antriebseinheit 12 eine erste Antriebswelle 26 und eine zweite Antriebswelle 28, die koaxial zur ersten Antriebswelle 26 angeordnet ist. Die Antriebswelle 26 ist dem unteren Propeller 22 zugeordnet, und die Antriebswelle 28 ist dem oberen Propeller 24 zugeordnet.

Die Antriebswelle 26 ist als Hohlwelle ausgebildet, wobei die Antriebswelle 28 in der Hohlwelle geführt ist.

Zum Antrieb der Antriebswellen 26, 28 ist ein elektrisches Antriebsmodul 30 vorgesehen. Das Antriebsmodul 30 umfasst zwei Elektromotoren 32, 34, die als Innenläufermotoren ausgebildet sind. Die Rotoren 36 der Elektromotoren 32, 34 sind mit jeweils einer der Antriebswellen 26, 28 gekoppelt.

Die beiden Elektromotoren 32, 34 sind in einem gemeinsamen Gehäuse 38 untergebracht, wobei die Elektromotoren 32, 34 koaxial zueinander in dem Gehäuse 38 angeordnet sind.

Das Gehäuse 38 umfasst einen Kühlkörper 40 sowie einen oberen und einen unteren Gehäusedeckel 42, 44. Durch den Kühlkörper 40, der außenseitig mit Kühlrippen versehen ist, lässt sich die in den Elektromotoren 32, 34 entstehenden Wärme besonders schnell abführen.

Im unteren Gehäusedeckel 44 ist ein Fortsatz 45 gebildet, in dem ein Lager 47 für die Antriebswelle 26 vorgesehen ist.

Der Rotor 36 des oberen Elektromotors 32 ist fest mit der als Hohlwelle ausgebildeten Antriebswelle 26 verbunden, die den unteren Propeller 22 antreibt, und der Rotor des unteren Elektromotors 34 ist fest mit der Antriebswelle 28 des oberen Propellers 24 verbunden und treibt diesen über die durch die Hohlwelle geführte Antriebswelle 28 an.

Die Antriebseinheit 12 umfasst des Weiteren eine Lagereinheit 46, mittels der die Antriebseinheit 12 relativ um einem Drehlagerpunkt D schwenkbar mit der Kabine 14 verbunden ist.

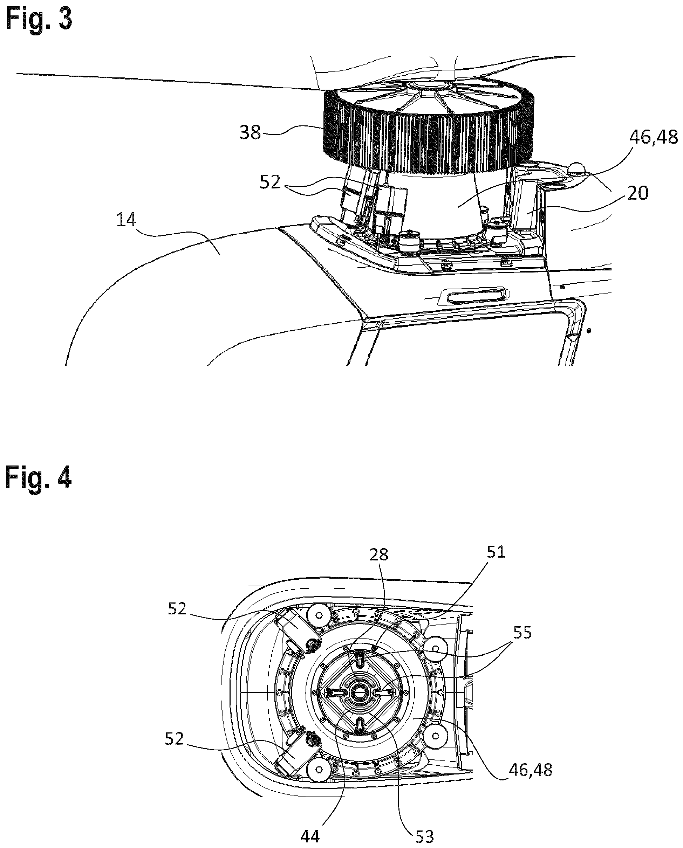

Die Lagereinheit 46 ist besonders deutlich in den Figuren 3 und 4 zu sehen.

Die Lagereinheit 46 umfasst ein kegelförmiges Anbindungselement 48, das an dem Träger 20 des Drehflüglers 10 verschraubt ist. Insbesondere ist das Anbindungselement 48 über insgesamt vier Anbindungspunkte an dem Träger 20 verschraubt.

Zudem ist eine Verstellvorrichtung 50 vorgesehen, um die Ausrichtung der Antriebswellen 26, 28 relativ zur Lagereinheit 46 beziehungsweise zum Träger 20 einstellen zu können.

Die Verstellvorrichtung 50 wirkt zwischen der Lagereinheit 46 und einer Einheit gebildet aus Antriebsmodul 30 und Antriebswellen 26, 28.

Im Ausführungsbeispiel greift die Verstellvorrichtung 50 mit einem Ende am Antriebsmodul 30 an.

Die Verstellvorrichtung 50 umfasst zwei längenverstellbare Aktuatoren 52, die insbesondere in einem Winkel zueinander angeordnet sind.

Insbesondere sind die Aktuatoren 52 mit einem Ende an dem Gehäuse 38 befestigt, genauer gesagt an der Unterseite des Gehäuses 38.

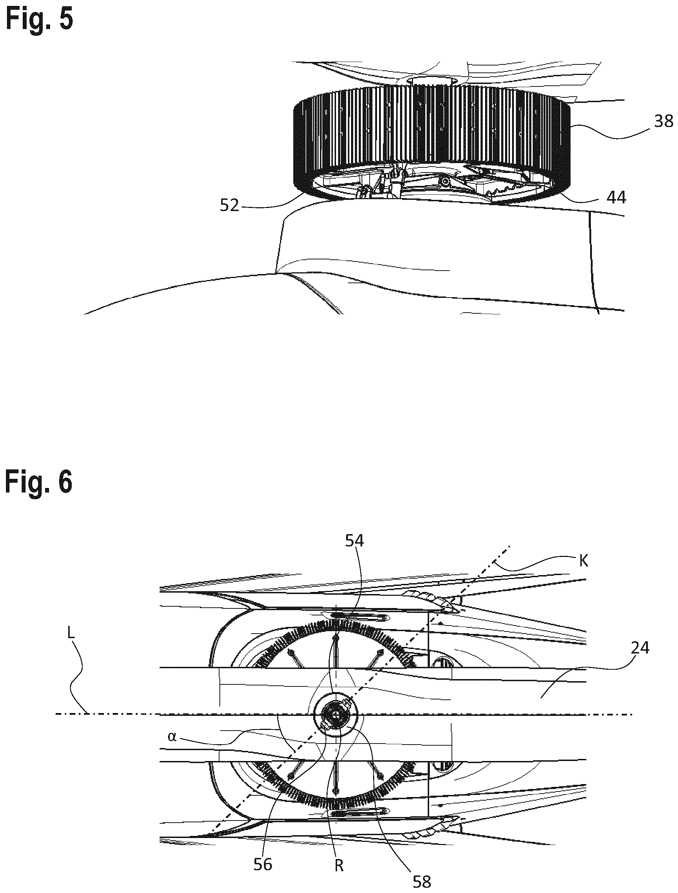

Wie in Figur 5 zu sehen ist, sind die Aktuatoren 52 gelenkig am Gehäuse 38, insbesondere am unteren Gehäusedeckel 44 befestigt.

Mit ihrem anderen Ende sind die Aktuatoren 52 am Anbindungselement 48 der Lagereinheit 46 befestigt.

Bei einer Längenänderung der Aktuatoren 52 wird folglich das Gehäuse 38 verschwenkt, wodurch auch die Antriebswellen 26, 28, die im Gehäuse 38 geführt sind, verschwenkt werden.

Durch einen gewissen Mindestabstand der Anbindungspunkte der Aktuatoren 52 in radialer Richtung bezogen auf die Mittelachse der Antriebswellen können die erforderlichen Kräfte zum Verschwenken der Einheit aus gebildet aus Antriebsmodul 30 und Antriebswellen 26, 28 gering gehalten werden.

Um ein Verschwenken der Antriebswellen 26, 28 zu ermöglichen, ist die Einheit gebildet aus Antriebsmodul 30 und Antriebswellen 26, 28 über ein Kardangelenk 51 mit der Lagereinheit 46 verbunden. Mit dem Kardangelenk wird im Flug die Auftriebskraft auf den Träger 20 übertragen.

Das Kardangelenk 51 enthält ein Kreuzstück 53, das außenseitig mittels zweier Stifte 55 schwenkbar an der Lagereinheit 46 und innenseitig mittels zweier Stifte 55 schwenkbar am unteren Gehäusedeckel 44 gelagert ist.

Das Kardangelenk 51 befindet sich dabei oberhalb des Lagers 47 für die Antriebswelle 28. Anders ausgedrückt ist das Lager 47 für die innenliegende der beiden Antriebswellen 26, 28 auf der von den Propellern 22, 24 abgewandten Seite des Kardangelenks 51 angeordnet. Dies geht besonders deutlich aus der Schnittdarstellung in Figur 2 sowie aus Figur 4 hervor.

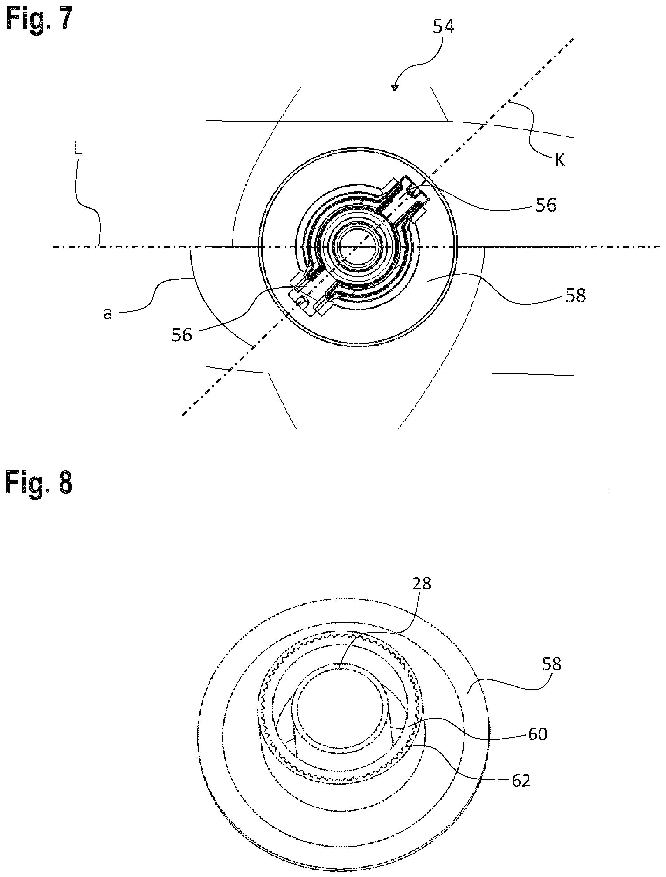

Figur 6 zeigt eine Draufsicht auf den Drehflügler 10, insbesondere auf den oberen Propeller 24 im Bereich einer Lagerung 54 des Propellers 24 an der Antriebswelle 28. Figur 7 zeigt einen Querschnitt durch die Lagerung 54.

Der Propeller 24 ist relativ zur Rotationsachse R der Antriebswelle 28 um eine Kippachse K kippbar gelagert.

Entlang der Kippachse K erstrecken sich zwei Bolzen 56, die eine Nabe 58 des Propellers 24 mit der Antriebswelle 28 gelenkig verbindet.

Der untere Propeller 22 ist auf die gleiche Weise gelagert.

Die Kippachse K jedes Propellers 22, 24 verläuft in einer Ebene senkrecht zur Rotationsachse R der Antriebswellen 26, 28 und ist relativ zur Längsachse L des Propellers 22, 24 in einem Winkel α ausgerichtet, der von 90° verschieden ist. Vorzugsweise verläuft die Kippachse K relativ zur Längsachse L des Propellers 22, 24 in einem Winkel α von +30° bis +50° bzw. -30° bis -50°.

Figur 8 zeigt einen Querschnitt durch die Lagerung 54.

In Figur 8 ist ersichtlich, dass ein koaxial zur Nabe 58 des Propellers 24 angeordnetes Zwischenstück 60 vorgesehen ist. An dem Zwischenstück 60 ist der Bolzen 56 gelagert.

Das Zwischenstück 60 ist mit der Nabe 58 lösbar verbunden, insbesondere mittels einer Verzahnung 62. Auf diese Weise ist die Nabe 58 in verschiedenen Winkelstellungen mit dem Zwischenstück 60 verbindbar.

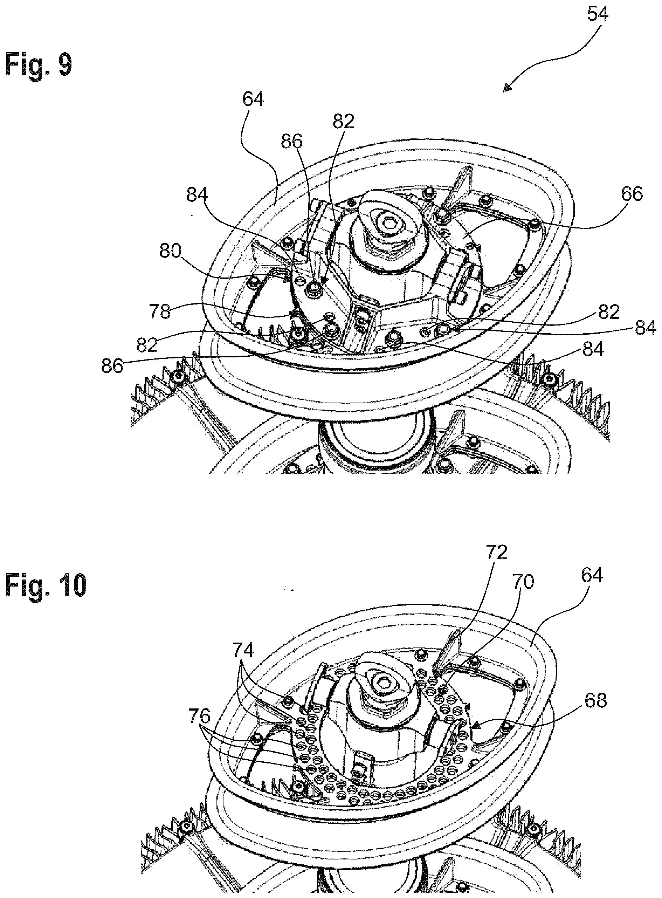

Die Figuren 8 und 9 veranschaulichen eine alternative Möglichkeit, um einen Winkelversatz der Propeller 22, 24 relativ zur Kippachse K zu realisieren.

Die Lagerung 54 ist in diesem Fall durch ein Bauteil 64, das mit dem Propeller 24 verbunden ist, und ein Zwischenstück 66 realisiert. In Figur 10 ist das Zwischenstück 66 zur besseren Veranschaulichung ausgeblendet.

An dem Bauteil 64 ist eine Verbindungsfläche 68 (siehe Figur 10) vorhanden, in der zwei Lochkreise 70, 72 gebildet sind, sodass die Verbindungsfläche 68 eine Vielzahl von Löchern 74, 76 aufweist.

Die Lochkreise 70, 72 haben einen unterschiedlichen Durchmesser.

Die Löcher 74 des ersten Lochkreises 70 sind in einem Winkelversatz zu den Löchern 76 des zweiten Lochkreises 72 angeordnet. Beispielsweise haben die Löcher **74,** 76 eines Lochkreises 70, 72 einen Versatz von 6° zueinander und die Löcher 74 des ersten Lochkreises 70 sind zudem um 3° zu den Löchern 76 des zweiten Lochkreises 72 versetzt. Jeder Lochkreis 70, 72 hat im Ausführungsbeispiel folglich 60 Löcher **74,** 76.

An den Zwischenstück 66 ist der Bolzen 56 gelagert, der in den Figuren 9 und 10 verdeckt ist.

Das Zwischenstück 66 hat eine zur Verbindungsfläche 68 korrespondierende Anlagefläche 78, die in Figur 9 verdeckt ist, da die Anlagefläche 78 an der Verbindungsfläche 68 anliegt.

In der Anlagefläche 78 ist ein Lochbild 80 vorhanden.

Die Löcher 74, 76 in der Verbindungsfläche 68 und Löcher 82, 84 des Lochbilds 80 dienen als Schraublöcher, um den Propeller 24 am Zwischenstück 66 zu befestigen. Zu diesem Zweck kann das Lochbild 80 der Anlagefläche 78 derart ausgerichtet werden, dass zumindest einige Löcher 82 mit Löchern 74, 76 der Verbindungsfläche 68 fluchten, sodass sich eine Schraube 86 durch die Verbindungsfläche 68 und die Anlagefläche 78 hindurchstecken lässt.

Das Lochbild 80 ist derart ausgebildet, dass sich der Propeller 24 in verschiedenen Winkelstellungen mit dem Zwischenstück 66 verbinden lässt.

In Figur 9 ist zu erkennen, dass das Lochbild 80 eine erste Gruppe von Löchern 82 hat, die mit den Löchern 74 des ersten Lochkreises 70 der Verbindungsfläche 68 fluchten, und eine zweite Gruppe von Löchern 84, die mit den Löchern 76 des zweiten Lochkreises 72 der Verbindungsfläche 68 fluchten. Die Löcher einer Gruppe haben also jeweils denselben Radialabstand zu einer Rotationsachse des Propellers 24 bzw. sie liegen auf einem Kreis, dessen Durchmesser dem Durchmesser eines der Lochkreise 70, 72 entspricht. Anders ausgedrückt sind die Löcher 82 der ersten Gruppe den ersten Lochkreis 70 zugeordnet und die Löcher 84 der zweiten Gruppe sind dem zweiten Lochkreis 72 zugeordnet.

Wie in Figur 9 des Weiteren zu erkennen ist, sind die Löcher 82, 84 des Lochbilds 80 derart angeordnet, dass nicht alle Löcher 82, 84 gleichzeitig mit den Löchern 74, 76 fluchten.

Auf diese Weise kann in Zusammenspiel mit den zueinander versetzten Löchern 74, 76 der Lochkreise 70, 72 eine verbesserte Winkelverstellung ermöglicht werdeb, bei der ein Winkelversatz zwischen den möglichen Winkelpositionen möglichst klein ist. Im Ausführungsbeispiel ist der Winkelversatz zwischen den realisierbaren Positionen jeweils 3°.

Genauer gesagt hat das Lochbild 80 verschiedene Lochpaare, die jeweils ein Loch 82 der ersten Gruppe und ein Loch 84 der zweiten Gruppe haben, wobei die Lochpaare im Wechsel mit den Löchern 74, 76 der Lochkreise 70, 72 fluchten.

Die Lagerung des Propellers 22 kann auf die gleiche Weise realisiert sein.

In einer alternativen Ausführungsform, die der Einfachheit halber nicht dargestellt ist, kann das Bauteil 64 integral mit dem Propeller 22, 24 gebildet sein.

## Patentansprüche

1. Antriebseinheit (12) für einen Drehflügler (10), mit einem ersten Propeller (22) und einen zweiten Propeller (24), der gegenläufig zum ersten Propeller (22) und von diesem axial beabstandet ist,
mit einer ersten Antriebswelle (26) und einer zur ersten Antriebswelle (26) koaxial angeordneten zweiten Antriebswelle (28) für die Propeller (22, 24),
wobei die beiden Propeller (22, 24) jeweils starr sind und relativ zu einer Rotationsachse (R) ihrer Antriebswellen (26, 28) kippbar gelagert sind, wobei eine Kippachse (K) jedes Propellers (22, 24) in einer Ebene senkrecht zur Rotationsachse der Antriebswellen (26, 28) verläuft und relativ zu einer Längsachse (L) des Propellers (22, 24) in einem Winkel (α) ausgerichtet ist, der von 90° verschieden ist,
und mit einem elektrischen Antriebsmodul (30) mit mindestens zwei Rotoren (36), die mit jeweils einer der Antriebswellen (26, 28) gekoppelt sind,
wobei ein Verhältnis eines Durchmessers der Propeller (22, 24) zu einem Axialabstand zwischen den Propellern (22, 24) zwischen 4:1 und 12:1 liegt.

2. Antriebseinheit (12) nach Anspruch 1, **dadurch gekennzeichnet, dass** die Kippachse (K) relativ zur Längsachse des Propellers (22, 24) in einem Winkel von +30° bis +50° bzw. -30° bis -50° verläuft.

3. Antriebseinheit (12) nach einem der vorhergehenden Ansprüche, **dadurch gekennzeichnet, dass** sich entlang der Kippachse (K) mindestens ein Bolzen (56) erstreckt, der eine Nabe (58) des Propellers (22, 24) mit der Antriebswelle (26, 28) gelenkig verbindet.

4. Antriebseinheit (12) nach Anspruch 3, **dadurch gekennzeichnet, dass** ein koaxial zur Nabe (58) des Propellers (22, 24) angeordnetes und mit der Nabe (58) lösbar verbundenes Zwischenstück (60) vorgesehen ist, an dem der Bolzen (56) gelagert ist und das in verschiedenen Winkelstellungen mit der Nabe (58) verbindbar ist.

5. Antriebseinheit (12) nach Anspruch 3, **dadurch gekennzeichnet, dass** der Propeller (22, 24) eine Verbindungsfläche (68) aufweist, in der eine Vielzahl von Löchern (74, 76) vorhanden ist, und ein Zwischenstück (66), an dem der Bolzen (56) gelagert ist, eine zur Verbindungsfläche (68) korrespondierende Anlagefläche (78) hat, wobei in der Anlagefläche (78) ein Lochbild (80) vorhanden ist, welches derart ausgebildet ist, dass sich der Propeller (22, 24) in verschiedenen Winkelstellungen mit dem Zwischenstück (66) verbinden lässt.

6. Antriebseinheit (12) nach einem der vorhergehenden Ansprüche, **dadurch gekennzeichnet, dass** das elektrische Antriebsmodul (30) zwei Elektromotoren (32, 34) aufweist, die koaxial zueinander in einem gemeinsamen Gehäuse (38) untergebracht sind.

7. Antriebseinheit (12) nach einem der vorhergehenden Ansprüche, **dadurch gekennzeichnet, dass** die Antriebseinheit (12) eine Lagereinheit (46) umfasst, mittels der die Antriebseinheit (12) relativ zu einem Drehlagerpunkt (D) schwenkbar mit einer Kabine (14) des Drehflüglers (10) verbindbar ist.

8. Antriebseinheit (12) nach Anspruch 7, **dadurch gekennzeichnet, dass** zwischen der Lagereinheit (46) und einer Einheit gebildet aus Antriebsmodul (30) und Antriebswellen (26, 28) eine Verstellvorrichtung (50) wirkt, um die Ausrichtung der Antriebswellen (26, 28) relativ zur Lagereinheit (46) einstellen zu können.

9. Antriebseinheit (12) nach Anspruch 8, **dadurch gekennzeichnet, dass** die Verstellvorrichtung (50) mit einem Ende am Antriebsmodul (30) angreift.

10. Antriebseinheit (12) einem der Ansprüche 7 bis 9, **dadurch gekennzeichnet, dass** eine Einheit gebildet aus Antriebsmodul (30) und Antriebswellen (26, 28) über ein Kardangelenk (51) mit der Lagereinheit (46) verbunden ist.

11. Antriebseinheit (12) nach Anspruch 10, **dadurch gekennzeichnet, dass** ein Lager (47) für die innenliegende der beiden Antriebswellen (26, 28) auf der von den Propellern (22, 24) abgewandten Seite des Kardangelenks (51) angeordnet ist.

12. Drehflügler (10) mit einer Antriebseinheit (12) nach 1 bis 11, **dadurch gekennzeichnet, dass** der Drehflügler (10) eine Kabine (14) aufweist, die einen Fahrgastraum (16) und/oder einen Nutzlastraum (18) bildet.

13. Drehflügler (10) nach Anspruch 12, **dadurch gekennzeichnet, dass** der Drehflügler (10) einen Träger (20) für die Antriebseinheit (12) umfasst, wobei die Verstellvorrichtung (50) an der Lagereinheit (46) fixiert ist und derart ausgebildet ist, dass sie die Einheit gebildet aus Antriebsmodul (30) und Antriebswellen (26, 28) in Bezug zum Träger (20) verschwenken kann.

14. Drehflügler (10) nach einem der Ansprüche 12 und 13, **dadurch gekennzeichnet, dass** eine Antriebseinheit (12) oberhalb der Kabine (14) angeordnet ist, insbesondere wobei die Kabine (14) den Träger (20) bildet.

## Claims

1. A drive unit (12) for a rotary-wing aircraft (10), comprising a first propeller (22) and a second propeller (24), which rotates in the opposite direction to, and is axially spaced apart from, the first propeller (22),
comprising a first drive shaft (26) and a second drive shaft (28), arranged coaxially with the first drive shaft (26), for the propellers (22, 24),
wherein the two propellers (22, 24) are each rigid and are mounted so as to be tiltable relative to an axis of rotation (R) of their drive shafts (26, 28), wherein a tilt axis (K) of each propeller (22, 24) extends in a plane perpendicular to the axis of rotation of the drive shafts (26, 28) and is oriented at an angle (α) different from 90 degrees relative to a longitudinal axis (L) of the propeller (22, 24),
and comprising an electric drive module (30) having at least two rotors (36) which are coupled to a respective one of the drive shafts (26, 28),
wherein a ratio of a diameter of the propellers (22, 24) to an axial distance between the propellers (22, 24) is between 4:1 and 12:1.

2. The drive unit (12) according to claim 1, **characterized in that** the tilt axis (K) extends at an angle of +30° to +50° or -30° to -50° relative to the longitudinal axis of the propeller (22, 24).

3. The drive unit (12) according to any of the preceding claims, **characterized in that** at least one pin (56) extends along the tilt axis (K) and connects a hub (58) of the propeller (22, 24) to the drive shaft (26, 28) in an articulated manner.

4. The drive unit (12) according to claim 3, **characterized in that** an intermediate piece (60) is provided which is arranged coaxially with the hub (58) of the propeller (22, 24) and is detachably connected to the hub (58) and on which the pin (56) is mounted and which is adapted to be connected to the hub (58) in various angular positions.

5. The drive unit (12) according to claim 3, **characterized in that** the propeller (22, 24) has a connecting surface (68) in which a multitude of holes (74, 76) is provided, and an intermediate piece (66) on which the pin (56) is mounted has a contact surface (78) corresponding to the connecting surface (68), wherein the contact surface (78) has a hole pattern (80) provided therein which is configured such that the propeller (22, 24) can be connected to the intermediate piece (66) in various angular positions.

6. The drive unit (12) according to any of the preceding claims, **characterized in that** the electric drive module (30) includes two electric motors (32, 34) which are accommodated coaxially with each other in a shared housing (38).

7. The drive unit (12) according to any of the preceding claims, **characterized in that** the drive unit (12) comprises a bearing unit (46) by means of which the drive unit (12) can be connected to a cabin (14) of the rotary-wing aircraft (10) so as to be pivotable relative to a pivot bearing point (D).

8. The drive unit (12) according to claim 7, **characterized in that** an adjusting device (50) acts between the bearing unit (46) and a unit formed of the drive module (30) and the drive shafts (26, 28) in order to be able to adjust the orientation of the drive shafts (26, 28) relative to the bearing unit (46).

9. The drive unit (12) according to claim 8, **characterized in that** one end of the adjusting device (50) engages the drive module (30).

10. The drive unit (12) according to any of claims 7 to 9, **characterized in that** a unit formed of the drive module (30) and the drive shafts (26, 28) is connected to the bearing unit (46) by means of a universal joint (51).

11. The drive unit (12) according to claim 10, **characterized in that** a bearing (47) for the inner one of the two drive shafts (26, 28) is arranged on the side of the universal joint (51) facing away from the propellers (22, 24).

12. A rotary-wing aircraft (10) comprising a drive unit (12) according to 1 to 11, **characterized in that** the rotary-wing aircraft (10) includes a cabin (14) which constitutes a passenger compartment (16) and/or a payload compartment (18).

13. The rotary-wing aircraft (10) according to claim 12, **characterized in that** the rotary-wing aircraft (10) comprises a carrier (20) for the drive unit (12), wherein the adjusting device (50) is fixed to the bearing unit (46) and is configured such that it can pivot the unit formed of the drive module (30) and the drive shafts (26, 28) in relation to the carrier (20).

14. The rotary-wing aircraft (10) according to either of claims 12 and 13, **characterized in that** a drive unit (12) is arranged above the cabin (14), in particular wherein the cabin (14) constitutes the carrier (20).

## Revendications

1. Unité d'entraînement (12) pour aéronef (10) à voilure tournante, comprenant une première hélice (22) et une deuxième hélice (24) qui tourne en sens inverse de la première hélice (22) et est espacée axialement de celle-ci,
comprenant un premier arbre d'entraînement (26) et un deuxième arbre d'entraînement (28) agencé de manière coaxiale par rapport au premier arbre d'entraînement (26) pour les hélices (22, 24),
les deux hélices (22, 24) étant chacune rigides et montées de manière basculante par rapport à un axe de rotation (R) de leurs arbres d'entraînement (26, 28), un axe de basculement (K) de chaque hélice (22, 24) s'étendant dans un plan perpendiculaire à l'axe de rotation des arbres d'entraînement (26, 28) et étant orienté par rapport à un axe longitudinal (L) de l'hélice (22, 24) selon un angle (α) différent de 90°,
et comprenant un module d'entraînement électrique (30) présentant au moins deux rotors (36) qui sont chacun couplés à l'un des arbres d'entraînement (26, 28),
un rapport entre un diamètre des hélices (22, 24) et la distance axiale entre les hélices (22, 24) étant compris entre 4:1 et 12:1.

2. Unité d'entraînement (12) selon la revendication 1, **caractérisée en ce que** l'axe de basculement (K) s'étend par rapport à l'axe longitudinal de l'hélice (22, 24) selon un angle compris entre +30° et +50° ou entre -30° et -50°.

3. Unité d'entraînement (12) selon l'une des revendications précédentes, **caractérisée en ce qu'**au moins un boulon (56) s'étend le long de l'axe de basculement (K) et relie un moyeu (58) de l'hélice (22, 24) de manière articulée à l'arbre d'entraînement (26, 28).

4. Unité d'entraînement (12) selon la revendication 3, **caractérisée en ce qu'**il est prévu une pièce intermédiaire (60) qui est agencée de manière coaxiale par rapport au moyeu (58) de l'hélice (22, 24), est reliée de manière amovible au moyeu (58), sur laquelle est monté le boulon (56) et qui est apte à être reliée au moyeu (58) dans différentes positions angulaires.

5. Unité d'entraînement (12) selon la revendication 3, **caractérisée en ce que** l'hélice (22, 24) présente une surface de raccordement (68) dans laquelle il est prévu une pluralité de trous (74, 76), et **en ce qu'**une pièce intermédiaire (66) sur laquelle est monté le boulon (56) présente une surface d'appui (78) correspondant à la surface de raccordement (68), la surface d'appui (78) présentant un gabarit de trous (80) réalisé de sorte que l'hélice (22, 24) est apte à être reliée à la pièce intermédiaire (66) dans différentes positions angulaires.

6. Unité d'entraînement (12) selon l'une des revendications précédentes, **caractérisée en ce que** le module d'entraînement électrique (30) présente deux moteurs électriques (32, 34) qui sont logés de manière coaxiale l'un par rapport à l'autre dans un boîtier commun (38).

7. Unité d'entraînement (12) selon l'une des revendications précédentes, **caractérisée en ce que** l'unité d'entraînement (12) comprend une unité à palier (46) au moyen de laquelle l'unité d'entraînement (12) est apte à être reliée de manière pivotante à une cabine (14) de l'aéronef (10) à voilure tournante par rapport à un point de roulement rotatif (D).

8. Unité d'entraînement (12) selon la revendication 7, **caractérisée en ce qu'**un dispositif d'ajustage (50) agit entre l'unité à roulement (46) et une unité formée par le module d'entraînement (30) et les arbres d'entraînement (26, 28) afin de pouvoir régler l'orientation des arbres d'entraînement (26, 28) par rapport à l'unité à roulement (46).

9. Unité d'entraînement (12) selon la revendication 8, **caractérisée en ce que** le dispositif d'ajustage (50) s'engage avec une extrémité sur le module d'entraînement (30).

10. Unité d'entraînement (12) selon l'une des revendications 7 à 9, **caractérisée en ce qu'**une unité formée par le module d'entraînement (30) et les arbres d'entraînement (26, 28) est reliée à l'unité à roulement (46) par l'intermédiaire d'un joint de Cardan (51).

11. Unité d'entraînement (12) selon la revendication 10, **caractérisée en ce qu'**un roulement (47) pour l'arbre d'entraînement intérieur parmi les deux arbres d'entraînement (26, 28) est agencé du côté du joint de Cardan (51) qui est détourné des hélices (22, 24).

12. Aéronef (10) à voilure tournante présentant une unité d'entraînement (12) selon 1 à 11, **caractérisé en ce que** l'aéronef (10) à voilure tournante comporte une cabine (14) qui forme un habitacle (16) et/ou un compartiment de charge utile (18).

13. Aéronef (10) à voilure tournante selon la revendication 12, **caractérisé en ce que** l'aéronef (10) à voilure tournante comprend un support (20) pour l'unité d'entraînement (12), le dispositif d'ajustage (50) étant fixé à l'unité à roulement (46) et étant réalisé de manière à pouvoir faire pivoter l'unité formée par le module d'entraînement (30) et les arbres d'entraînement (26, 28) par rapport au support (20).

14. Aéronef (10) à voilure tournante selon l'une des revendications 12 et 13, **caractérisé en ce qu'**une unité d'entraînement (12) est agencée au-dessus de la cabine (14), la cabine (14) formant notamment le support (20).
